# EUROPEAN PATENT SPECIFICATION

(11) **EP 2 498 170 B1**
(45) Date of publication and mention of the grant of the patent: **25.09.2019**
(21) Application number: 10826405.2
(22) Date of filing: 13.07.2010
(51) Int. Cl.: G06F 3/033, G01B 11/00, G06F 3/0346, G06F 3/03

(54) **OPERATION INPUT DEVICE**
BEDIENUNGSEINGABEVORRICHTUNG
DISPOSITIF D'INTRODUCTION D'OPÉRATION

(30) Priority: 02.11.2009 JP 2009252330
(43) Date of publication of application: 12.09.2012
(73) Proprietor: Sony Interactive Entertainment Inc., Tokyo 108-0075 (JP)
(72) Inventor: IKENOUE, Shoichi, Tokyo 108-0075 (JP); SUZUKI, Kentarou, Tokyo 108-0075 (JP)
(74) Representative: Müller Hoffmann & Partner
(86) International application number: PCT/JP2010/061822
(87) International publication number: WO 2011/052270

(56) References cited:
- EP-A2- 1 770 487
- JP-A- 8 071 252
- JP-A- 2005 293 089
- JP-A- 2007 095 030
- US-A1- 2005 104 848

## Description

### TECHNICAL FIELD

The present invention relates to an operation input device for use by a user while being held by his/her hand, an information processing device connected to the operation input device, a posture determining method for the operation input device, and an information storage medium.

### BACKGROUND ART

Some of the operation input devices, such as a controller of a consumer game device, that are used by a user to input an operation have a posture determining sensor, such as an acceleration sensor, a gyro sensor, and the like, for determining the posture of the operation input device (see, e.g.Patent Document 1). Using such an operation input device, a user can input various operations not only by pressing an operation button but also inclining or moving the operation input device itself. Some application programs, such as a game application program, are available for carrying out a process according to such an operation input by inclining an operation input device.

### Citation List

### Patent Literature

Patent Literature 1: U.S. Patent Application Publication 2007/0260727

EP 1 770 487 A2 discloses a graphic signal display apparatus and method for a hand-held terminal. The document teaches that, instead of the usual method of scrolling by means of a keypad or a stylus, a camera is used to determine the movement of the hand-held terminal. The graphic signal is moved and displayed accordingly.

### SUMMARY OF INVENTION

### Technical Problem

However, some operation input devices do not have such a posture determining sensor. An application program that is premised on operation input through posture determination cannot be used in such an operation input device.

The present invention has been conceived in view of the above described situation, and one object thereof is to provide an operation input device, an information processing device, a posture determining method for the operation input device, a program, and an information storage medium capable of operation input by changing the posture of the operation input device despite absence of a posture determining sensor.

### Solution to Problem

The problems are solved by the subject-matter of the independent claims. Particular embodiments are set out in the respective dependent claims. Embodiments which do not fall within the scope of the claims do not describe part of the present invention.

An operation input device according to the present invention comprises a captured image obtaining unit for obtaining a captured image captured by an image capturing unit provided to the operation input device, and a posture determining unit for determining the posture of the operation input device, based on the result of analysis on the captured image obtained.

An information processing device according to the present invention is connected to an operation input device for use by a user while being held by the user's hand, and comprises a captured image obtaining unit for obtaining a captured image captured by an image capturing unit provided to the operation input device, and a posture determining unit for determining the posture of the operation input device, based on the result of analysis on the captured image obtained.

A posture determining method for an operation input device according to the present invention comprises a step of obtaining a captured image captured by an image capturing unit provided to the operation input device, and a step of determining the posture of the operation input device, based on the result of analysis on the captured image obtained.

An information storage medium according to the present invention is a computer readable information storage medium storing a program for causing a computer to function as a captured image obtaining unit for obtaining a captured image captured by an image capturing unit provided to the operation input device, and a posture determining unit for determining the posture of the operation input device, based on the result of analysis on the captured image obtained.

### BRIEF DESCRIPTION OF DRAWINGS

FIG. 1 is a perspective view showing external appearance of an operation input device according to a first embodiment of the present invention;
FIG. 2 is a block diagram showing an internal structure of the operation input device according to this embodiment;
FIG. 3 is a functional block diagram showing a functional example of the operation input device according to this embodiment;
FIG. 4 is a diagram showing one example of a captured image containing the face of a user;
FIG. 5A is a diagram showing the operation input device having rotated around the Z axis relative to a reference posture;
FIG. 5B is a diagram showing a captured image in the condition shown in FIG. 5A;
FIG. 6A is a diagram showing the operation input device having rotated around the X axis relative to the reference posture;
FIG. 6B is a diagram showing a captured image in the condition shown in FIG. 6A;
FIG. 7A is a diagram showing the operation input device having rotated around the Y axis relative to the reference posture;
FIG. 7B is a diagram showing a captured image in the condition shown in FIG. 7A;
FIG. 8A is a diagram showing the operation input device having moved in parallel;
FIG. 8B is a diagram showing a captured image in the condition shown in FIG. 8A; and
FIG. 9 is a structural block diagram of an information processing system including the information processing device according to a second embodiment of the present invention.

### DESCRIPTION OF ENBODIMENTS

In the following, an embodiment of the present invention will be described in detail with reference to the accompanying drawings.

### [First Embodiment]

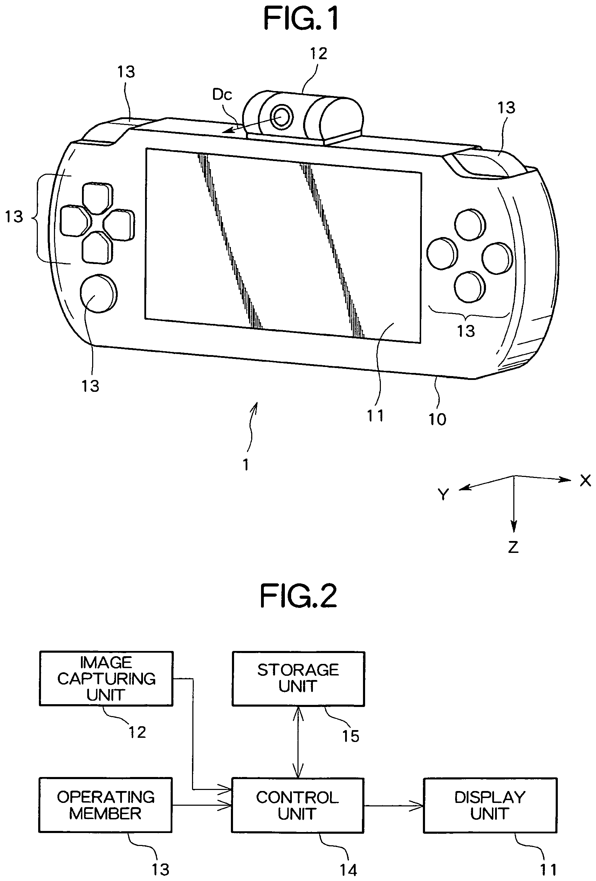

FIG. 1 is a perspective view showing external appearance of an operation input device 1 according to a first embodiment of the present invention. In this embodiment, it is assumed that the operation input device 1 is a portable game device for use by a user U while being held by his/her hand.

As shown in the diagram, the enclosure 10 of the operation input device 1 has a substantially rectangular panel-like shape as a whole, and has a display unit 11 formed on the surface thereof. An image capturing unit 12 is attached at the top of the enclosure 10. Note that it is assumed here that the landscape direction (the longitudinal direction) of the operation input device 1 corresponds to the X-axial direction, the portrait direction to the Z-axial direction, and the depth direction to the Y-axial direction.

The display unit 11 may be any of various image display devices, such as a liquid crystal display panel, an organic EL display panel, and the like. The image capturing unit 12 is a CCD camera or the like, and captures an image of an object around the operation input device 1. Specifically, in FIG. 1, the lens of the image capturing unit 12 is directed in the forward direction (the Y-axial positive direction) of the operation input device 1, and captures an image with the forward direction as an image capturing direction Dc. Note that the lens of the image capturing unit 12 is rotatable by 180 degrees with the X-axial direction as the rotation axis. Accordingly, the image capturing direction Dc of the image capturing unit 12 will change from the Y-axial positive direction via the Z-axial negative direction to the Y-axial negative direction (a direction toward the side of the rear surface of the operation input device 1).

The operation input device 1 has various operating members 13, such as an operation button, an analogue stick, and the like, formed on the surface of the enclosure 10 thereof. A user U can operate these operating members 13 to thereby input an operation to the operation input device 1.

As shown in FIG. 2, a control unit 14 and a storage unit 15 are provided in the operation input device 1.

The control unit 14 is a CPU or the like, and carries out various information processes according to a program stored in the storage unit 15. In this embodiment, the control unit 14 determines the posture of the operation input device 1, based on an image captured by the image capturing unit 12, and carries out a process of updating a screen image shown on the display unit 11, using the result of determination as an operation input by the user U. Content of the process carried out by the control unit 14 will be described later.

The storage unit 15 comprises a memory device, such as a RAM, a ROM, or the like, or a hard disk drive or the like, and stores a program to be executed by the control unit 14 and various data. The storage unit 15 operates also as a working memory of the control unit 14.

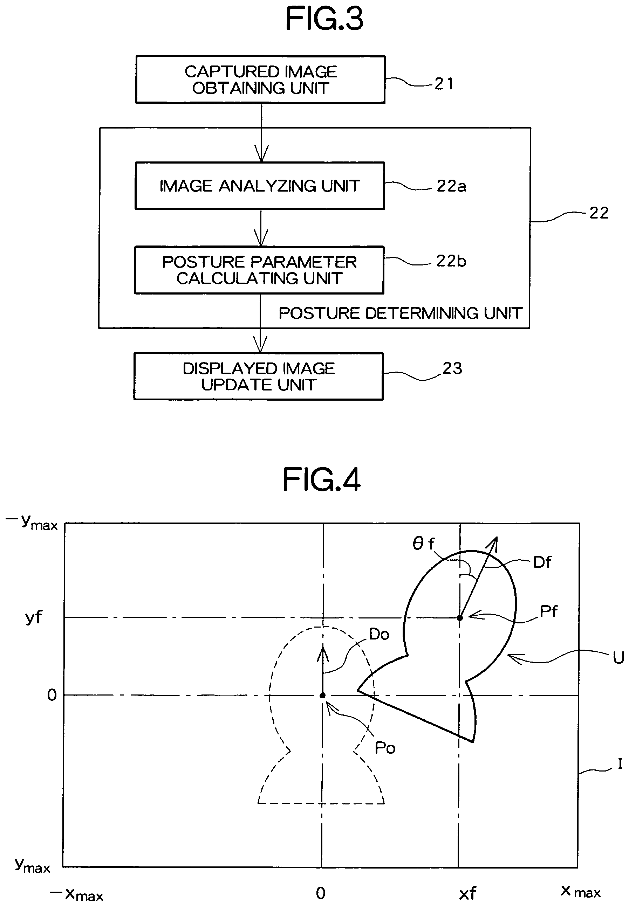

As shown in FIG. 3, the operation input device 1 functionally comprises a captured image obtaining unit 21, a posture determining unit 22, and a displayed image update unit 23. In this embodiment, the posture determining unit 22 comprises an image analyzing unit 22a and a posture parameter calculating unit 22b. These functions are realized by the control unit 14 by executing a program stored in the storage unit 15. The program may be provided to the operation input device 1 via a communication network, such as the Internet or the like, or as being stored in any of various computer readable information storage media, such as an optical disk, a memory card, and the like.

The captured image obtaining unit 21 obtains a captured image I captured by the image capturing unit 12. Specifically, the captured image obtaining unit 21 obtains a captured image I at each time point for every predetermined period of time while the operation input device 1 continues a posture determining process.

Note that the captured image I may be either a still image or a frame image in a motion image at one time point. That is, the image capturing unit 12 may capture a still image at a time designated by the captured image obtaining unit 21. Alternatively, the image capturing unit 12 may keep capturing a motion image, and the captured image obtaining unit 21 may extract a frame image as a captured image I from the motion image.

The posture determining unit 22 determines the posture of the operation input device 1, based on the result of analysis on the captured image I obtained by the captured image obtaining unit 21.

Specifically, the image analyzing unit 22a analyzes each captured image I captured by the captured image obtaining unit 21 for every predetermined period of time, and specifies an object (a target object) contained in the captured image I. The target object may be anything available to be used as a mark in determination of the posture of the operation input device 1, of which position and orientation in the captured image I can be specified. It is assumed here that a target object to be specified by the image analyzing unit 22a is the face of a user U holding the operation input device 1. A user U of the operation input device 1 holds the operation input device 1 with his/her both hands when using such that the operation input device 1 is located in front of his/her own face in order to view an image shown on the display unit 11. In the above, as the user U's face is positioned in the image capturing direction Dc of the image capturing unit 12, it is assumed that the user U's face is seen in the captured image I.

The image analyzing unit 22a specifies the center position of the user U's face in the captured image I (hereinafter referred to as a face position Pf). Further, the image analyzing unit 22a additionally specifies the inclination of the user U's face in the captured image (hereinafter referred to as a face direction Df). It is assumed here that the face direction Df is defined as a direction in which the top of the user U's head is directed in the captured image I. The face position Pf and the face direction Df can be specified using a known face recognition technique. Specifically, the image analyzing unit 22a may detect a part, such as an eye, the nose, and the like, contained in a face, or analyze brightness distribution, color distribution, heat distribution, distance distribution, and so forth, in the captured image I to specify the face position Pf and the face direction Df. Note that when two or more faces are detected in the captured image I, the image analyzing unit 22a may specify, e.g., the largest face in the size in the captured image I as the user U's face. FIG. 4 shows the positional coordinates (xf, yf) of the face position Pf and the angular value θf of the face direction Df specified in such image analysis. Note that the positional coordinates (xf, yf) of the face position Pf are expressed in a coordinate system of which origin coincides with the center position of the captured image I. The angular value θf of the face direction Df is expressed as an angle formed by the direction of the top of the user U's head relative to the upward direction (the vertical direction) of the captured image I.

Based on the result of analysis by the image analyzing unit 22a, the posture parameter calculating unit 22b calculates the value of a posture parameter indicative of the posture of the operation input device 1. Specifically, based on at least one of the face position Pf and the face direction Df specified by the image analyzing unit 22a, the posture parameter calculating unit 22b determines the posture of the operation input device 1. It is assumed here that the posture parameter calculating unit 22b calculates a roll angle θr, a pitch angle θp, and a yaw angle θy as posture parameters, based on the face position Pf and the face direction Df. These posture parameters, as to be described later in detail, indicate rotation angles of the operation input device 1 relative to the reference posture with the respective reference axes set on the operation input device 1 as the rotation axis.

Note that it is assumed here that the reference posture of the operation input device 1 is such that the center of the user U's face is present on a straight line extending in the image capturing direction Dc and that the upward direction (the Z axial negative direction) of the operation input device 1 coincides with the direction from the user U's face toward the top of his/her head. That is, when the operation input device 1 is in the reference position, the face position Pf is present in the center of the captured image I, and the face direction Df extends in the upward direction of the captured image I. The face position Pf and the face direction Df of the operation input device 1 in the reference posture will be hereinafter denoted as a reference face position Po and a reference face direction Do, respectively.

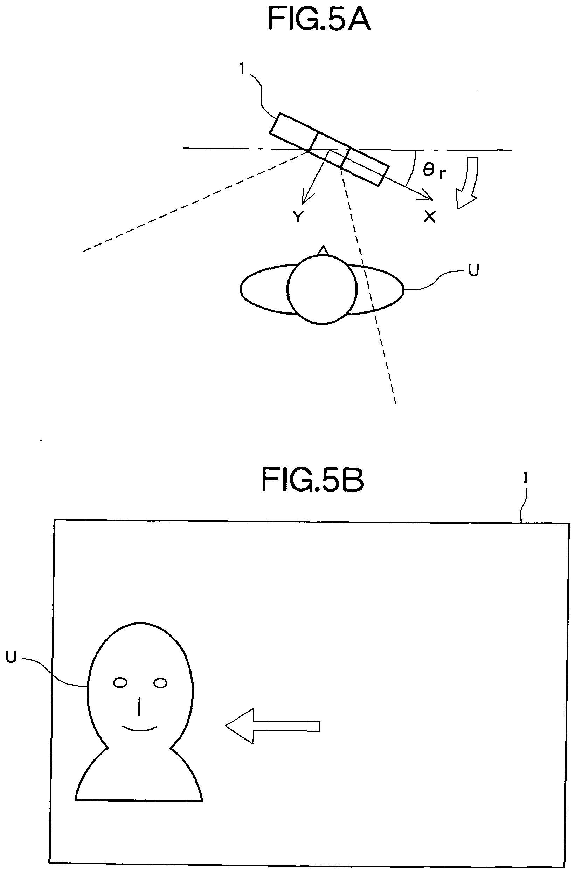

The roll angle θr indicates the rotation angle of the operation input device 1 relative to the reference posture with the Z axis as the rotation axis. FIG. 5A shows the operation input device 1 having rotated around the Z axis from the reference position, showing the user U and the operation input device 1 viewed from thereabove (the Z axial negative direction side). FIG. 5B shows a captured image I captured in the condition shown in FIG. 5A. As shown in these diagrams, when the operation input device 1 rotates around the Z-axis, the user U moves in the left-right direction when viewed from the image capturing unit 12, and accordingly, the face position Pf moves in the left-right direction relative to the reference face position Po in the captured image I. Then, the posture parameter calculating unit 22b calculates the roll angle θr, using a predetermined function, based on the x coordinate value xf of the face position Pf. For example, the posture parameter calculating unit 22b calculates the roll angle θr as the expression θr=a1·f (xf/xₘₐₓ), wherein a1 is a predetermined coefficient, xₘₐₓ is the maximum value of the x-coordinate value, and f(x) is a predetermined function. As one example, the posture parameter calculating unit 22b may calculate the roll angle θr as the expression θr=a1·xf/xₘₐₓ, based on an assumption that the roll angle θr is proportional to the x-coordinate value xf. The function f(x) may be a correction function determined in accordance with the structure of the image capturing unit 12, lens characteristic, and the like.

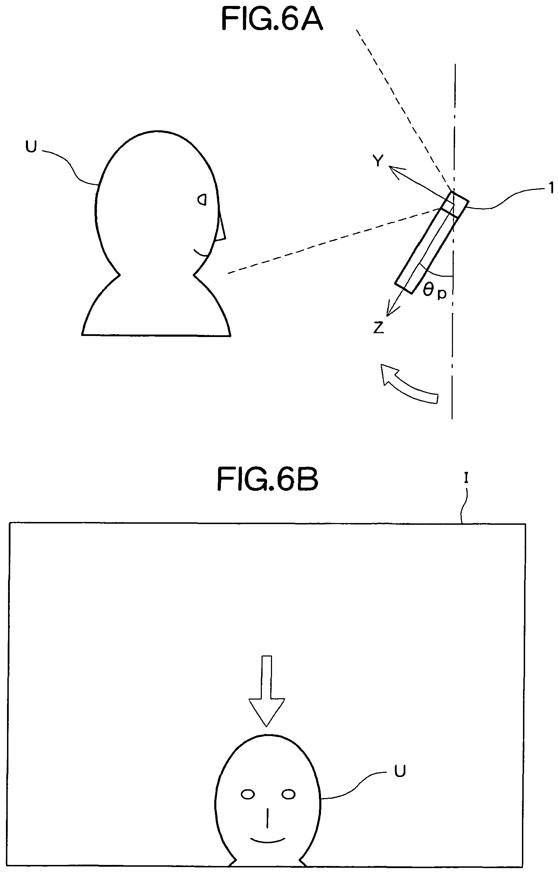

The pitch angle θp indicates the rotation angle of the operation input device 1 relative to the reference posture with the X-axis as the rotation axis. FIG. 6A shows the operation input device 1 having rotated around the X axis from the reference posture, showing the user U and the operation input device 1 viewed from a lateral side thereof (the X axial positive direction side). FIG. 6B shows a captured image I captured in the condition shown in FIG. 6A. As shown in these diagrams, when the operation input device 1 rotates around the X-axis, the user U moves in the up-down direction when viewed from the image capturing unit 12, and accordingly, the face position Pf moves in the up-down direction relative to the reference face position Po in the captured image I. Then, the posture parameter calculating unit 22b calculates the pitch angle θp, using a predetermined function, based on the y-coordinate value yf of the face position Pf. For example, the posture parameter calculating unit 22b may calculate the pitch angle θp as the expression θp=a2·g (yf/yₘₐₓ), wherein, similar to the case of the roll angle θr, a2 is a predetermined coefficient, yₘₐₓ is the maximum value of the y-coordinate value, and g(y) is a predetermined function. Note that the function g(y) may be the same function as the function f(x). As one example, the posture parameter calculating unit 22b may calculate the pitch angle θp as the expression θp=a2·yf/yₘₐₓ, based on the assumption that the pitch angle θp is proportional to the y-coordinate value yf.

As described above, the posture parameter calculating unit 22b calculates the roll angle θr and the pitch angle θp, based on the face position Pf in the captured image I. These posture parameters indicate the inclination of the operation input device 1 relative to the direction from the image capturing unit 12 to the user U. Note that the roll angle θr and the pitch angle θp are calculated, using values obtained by dividing the coordinate values xf and yf by the maximum coordinate values xₘₐₓ and yₘₐₓ, respectively. With the above, the role angle θr and the pitch angle θp can be calculated, based on the value obtained by normalizing position coordinates in the captured image I. In the above, a1 and a2 may be the same value. Further, the role angle θr and the pitch angle θp may be calculated as θr=a1·f(xf) and θp=a2·g(yf), respectively, without using xₘₐₓ and yₘₐₓ.

Note that although it is determined in the above that the origin of the position coordinate coincides with the reference face position Po, the origin of the position coordinate may be positioned different from the reference face position Po. For example, any of the four corners of the captured image I may be determined as the origin in expressing the coordinate values of the face position Pf. In this case, while the position coordinates of the reference face position Po are denoted as (xo, yo), calculation of the roll angle θr and the pitch angle θp, using (xf-xo) and (yf-yo) instead of xf and xf in the above mentioned respective expressions can provide a rotation angle relative to the reference posture.

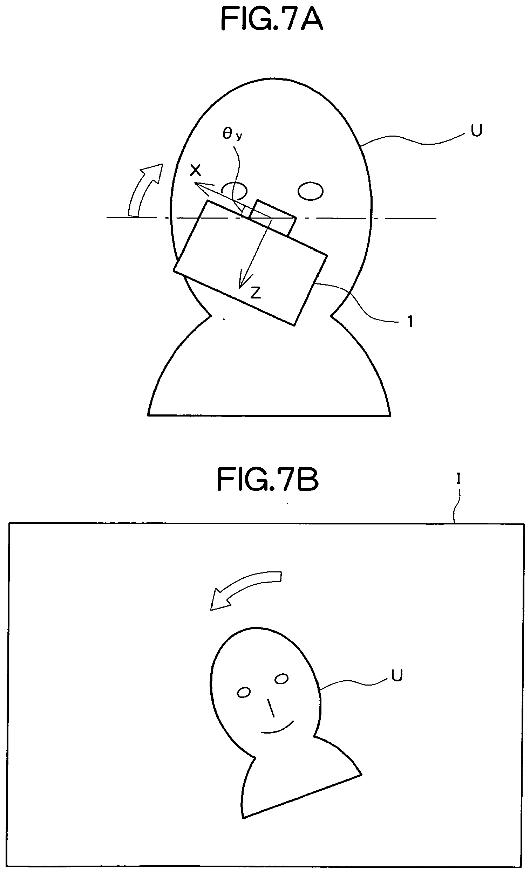

Meanwhile, the yaw angle θy indicates the rotation angle of the operation input device 1 relative to the reference posture with the Y-axis as the rotation axis . That is, the yaw angle θy indicates the inclination of the operation input device 1 on a plane perpendicular to the image capturing direction Dc. FIG. 7A shows the operation input device 1 having rotated around the Y-axis from the reference posture, showing the user U and the operation input device 1 viewed from the back surface side of the operation input device 1 (the Y-axial negative direction side). FIG. 7B shows a captured image I captured in the condition shown in FIG. 7A. As shown in these diagrams, when the operation input device 1 rotates around the Y-axis, the face direction Df in the captured image I rotates in the reverse direction. Therefore, the posture parameter calculating unit 22b calculates the yaw angle θy, using a predetermined function, based on the angular value θf of the face direction Df. For example, the posture parameter calculation unit 22b calculates the yaw angle θy as the expression θy=a3·h(θf), wherein a3 is a predetermined coefficient and h(θ) is a predetermined function. As one example, the posture parameter calculating unit 22b may calculate the yaw angle θy as the expression θy=a3·θf, based on an assumption that the yaw angle θy is proportional to the angular value θf.

Note that in the above description, the coefficients a1, a2, and a3 may be fixed values that are determined in advance according to an application program or the like or a value that is changeable according to a designation by the user U.

In particular, the coefficients a1 and a2 may be values that are changed based on the size (the size of a user U's face here) of a target object, the size being obtained in image analysis by the image analysis unit 22a. For example, when there is a slight difference between the actual position of the user U's face and an assumed position in the reference posture (that is, when the center position of the user U's face is slightly deviated from the straight line extending in the image capturing direction Dc), the difference may influence differently depending on the distance between the user U and the image capturing unit 12. That is, for a relatively short distance between the user U and the image capturing unit 12, even a slight change in the inclination of the operation input device 1 may result in a significant movement of the face position Pf in the captured image I. However, for a relatively long distance between the user U and the image capturing unit 12, the face position Pf may move by a smaller amount, compared to a case in which the distance between the user U and the image capturing unit 12 is relatively short, in response to the same amount of inclination of the operation input device 1. It should be noted here that the size of an area occupied by the user U's face in the captured image I is also specified in specification of the face position Pf and the face direction Df by the image analyzing unit 22a, and the distance from the image capturing unit 12 to the user U can be estimated based on the size of the face area. Therefore, when the coefficients a1 and a2 are determined based on the size of the face area, the posture parameter calculating unit 22b can calculate the roll angle θr and the pitch angle θp that reflect a change in the posture of the operation input device 1, while reducing the influence due to the above described difference. Specifically, the posture parameter calculating unit 22b may determine smaller values for the coefficients a1 and a2 with respect to a larger face area specified by the image analyzing unit 22a. Note that the posture parameter calculating unit 22b may use not only the size of the face area but also any other input information, such as parallax information or the like, in estimation of the distance to the user U's face.

In the above description, the posture parameter is calculated on the premise that the user U changes the orientation of the operation input device 1 but not the position itself of the operation input device 1 relative to the user U (that is, the image capturing position is not changed, while the image capturing direction Dc of the image capturing unit 12 is changed) . However, also when the user U should move in parallel the position of the operation input device 1, the face position Pf in the captured image I will move. Therefore, sole use of information on the face position Pf in the captured image I may not be able to discriminate between a case in which the user U rotates the operation input device 1 and a case in which the user U moves in parallel the operation input device 1.

In view of the above, the posture determining unit 22 may determine a change in the orientation of the target object relative to the direction extending from the image capturing unit 12 to a target object (the user U's face here), and based on the change determined in the orientation of the target object, determine whether or not the inclination of the operation input device 1 has been changed. Specifically, in specification of the user U's face contained in the captured image I, the image analyzing unit 22a determines the direction in which the front of the user U's face is directed. This determination can be made by specifying the position of a characteristic point, such as an eye, the nose, and the like, in the face area, and comparing the distribution (an extent of deviation) of the specified characteristic points in the face area with a reference value.

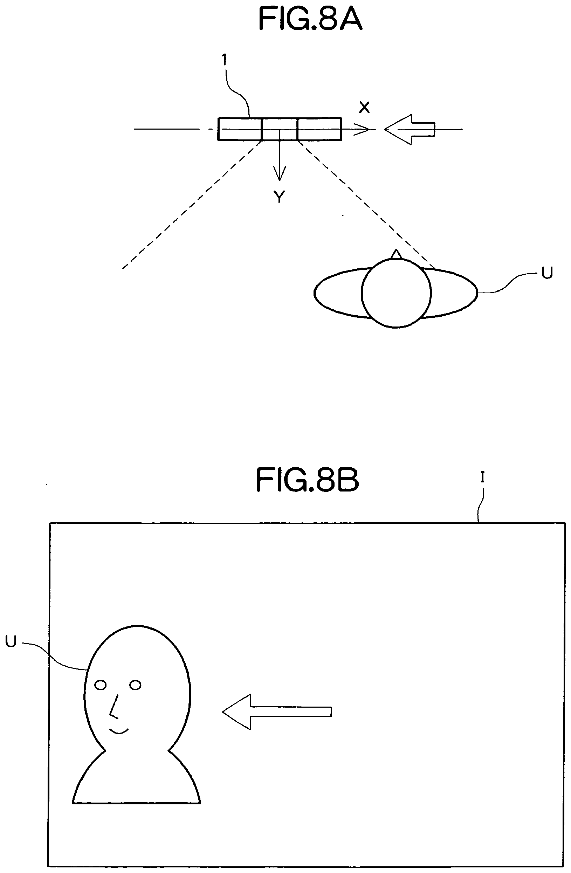

FIG. 8A shows the user U and the operation input device 1 viewed thereabove, similar to FIG. 5A, in which only the position, but the orientation, of the operation input device 1 has been changed. As shown in FIGS. 5A and 6A, when the user U changes the orientation alone of the operation input device 1, the face position Pf in the captured image I moves from the middle toward an outer edge of the captured image I. However, the position itself of the user U's face relative to the lens of the image capturing unit 12 remains unchanged in the actual space. That is, the front side of the user U's face is kept directed to the lens of the image capturing unit 12, and as shown in FIGS. 5B and 6B, the direction in which the front side of the user U's face is directed in the captured images I is rarely changed. However, when the user U moves in parallel the position of the operation input device 1, as shown in FIG. 8A, the direction in which the front side of the user U's face is directed moves departing from the lens of the image capturing unit 12. That is, as shown in FIG. 8B, as the operation input device 1 moves, the front side of the user U's face comes to be directed more outward of the captured image I.

In view of the above, the posture parameter calculating unit 22b analyzes the face image contained in the captured image I to calculate the angle of the forward direction of the user U's face relative to the direction from the user U to the image capturing unit 12. Specifically, the posture parameter calculating unit 22b may calculate the angle of the forward direction of the face, based on, e.g., distribution of the positions of parts, such as an eye, the nose, and the like, contained in the face, brightness distribution, color distribution, heat distribution, distance distribution, and so forth, in the face area. Then, the posture parameter calculating unit 22b determines that the operation input device 1 has moved in parallel by an amount corresponding to the angle calculated, and subtracts an amount attributed to the parallel movement from the position coordinate values xf, yf of the face position Pf for correction. Thereafter, the posture parameter calculating unit 22b calculates the above described roll angle θr and pitch angle θp, using the corrected values xf and yf. In this manner, when the face position Pf in the captured image I is changed, it is possible to separate an amount of change attributed to the parallel movement of the operation input device 1 and that attributed to the change in the inclination of the operation input device 1, and to calculate the amount of the change in the inclination of the operation input device 1. Note that the posture parameter calculating unit 22b may specify the angle of the forward direction of an eye, the nose, or the like, contained in the face, rather than the entire face, and calculate the amount of parallel movement of the operation input device 1, based on the specified angle.

Alternatively, the posture parameter calculating unit 22b may determine a parallel movement of the operation input device 1, based on the movement of the background image contained in the captured image I. That is, when the user U moves in parallel the operation input device 1, not only the position of the user U in the captured image I but also the entire background image of the user U will move in parallel. However, when the user U only inclines the operation input device 1, parallel movement of the entire background is not resulted, but the background image may be only distorted. In view of the above, it is possible to specify an amount by which the operation input device 1 has moved in parallel by comparing the background image in the captured image I with that in a past captured image I and thereby analyzing a change in the background image. Such analysis can be realized using the KLT method (Kanade-Lucas-Tomasi Feature Tracker) and so forth.

Note that, as described above, the posture determining unit 22 can calculate the distance from the image capturing unit 12 to the user U's face, based on the size of the face area. Using a change in the distance as time passes, the posture determining unit 22 can detect the user U's operation of, e.g., swinging the operation input device 1 in the front-back direction. As described above, the posture determining unit 22 may detect not only rotation (change in the inclination) of the operation input device 1 around the respective X, Y, and Z axes, but also movement of the operation input device 1 along the respective X, Y, and Z axes, then calculate the speed and acceleration of each movement, and output to the displayed image update unit 23.

The displayed image update unit 23 carries out a process of updating an image shown on the display unit 11, based on the result of posture determination by the posture determining unit 22. Specifically, the displayed image update unit 23 updates the displayed image, using as an operation input the value of the posture parameter calculated by the posture parameter calculating unit 22b. For example, the displayed image update unit 23 may carry out a process of moving a user object placed in a virtual 3D space or the position of the point of view defined in the virtual 3D space, based on the inclination direction and amount of the operation input device 1 specified based on the values of the roll angle θr and pitch angle θp, then produces an image reflecting the result of the process, and shows on the display unit 11. With the above, the operation input device 1 can execute an application program, such as a game application program, according to an operation input by the user U for changing the posture of the operation input device 1, and present the result to the user U.

The display image update unit 23 may show the captured image I itself captured by the image capturing unit 12 in a partial area on the display unit 11, together with the result of the process carried out based on the value of the posture parameter. Alternatively, the displayed image update unit 23 may show an image indicative of the result of analysis by the image analyzing unit 22a (that is, the face position Pf, face direction Df, and the like, of the user U specified in the captured image I) on the display unit 11. With the above, the user U can change the posture of the operation input device 1 while checking a change occurred to the captured image I in response to an operation input by the user U for changing the posture of the operation input device 1. This facilitates operation input. In the above, showing a horizontally reversed image as the captured image I enables readily and intuitive recognizition by the user U of a change in the face position Pf that has occurred in accordance with a change in the posture of the operation input device 1.

Although it is described in the above that the reference posture of the operation input device 1 is determined in advance such that the reference face position Po coincides with the center of the captured image I, the reference posture may be determined at the start of execution of an application program or the like. For example, the user U may operate the operating member 13 according to an instruction shown on the screen while holding the operation input device 1 in any desired posture, and the operation input device 1 may determine as the reference face position Po and the reference face direction Do the face position Pf and the face direction Df at the time when the operating member 13 is operated. Thereafter, a change of the operation input device 1 relative to the reference posture can be determined based on a change in the face position Pf relative to the reference face position Po and that in the face direction Df relative to the reference face direction Do.

In the above described posture determination, excessive inclination of the operation input device 1 may possibly leave the user U's face outside the angle of view of the image capturing unit 12, and consequently, the posture determining unit 22 may fail specification of the user U's face in the captured image I and thus calculation of the posture parameter. In such a case, the posture determining unit 22 may assume that the operation input device 1 remains at the posture determined based on the captured image I immediately before the failed specification of the user U's face. That is, the posture determining unit 22 keeps outputting the value of the last calculated posture parameter to the displayed image update unit 23 until following success in specification of the user U's face in the captured image I. Alternatively, upon failure in specification of the user U's face, the posture determining unit 22 may reset the change in the posture, and output a posture parameter identical to that which is to be output when the posture of the operation input device 1 returns to the reference posture.

According to the operation input device 1 according to the embodiment described above, even when a posture determining sensor, such as an acceleration sensor or the like, is not available, posture determination can be achieved based on a captured image I captured by the image capturing unit 12, similarly to a case in which such a sensor is used.

Note that an embodiment of the present invention is not limited to the above described embodiment. For example, the image capturing unit 12 is not limited to a CCD camera, and may be a camera for determining light, such as infrared radiation or the like, other than visible light, a 3D camera, and the like. Using such a camera, the operation input device 1 can obtain parallax information, information on heat and distance distribution in the captured image I, and the like.

In the above description, the image analyzing unit 22a specifies the user U's face contained in a captured image I in a face recognition process. However, face recognition is not mandatory. For example, the image analyzing unit 22a may specify the contour of a person to thereby specify the position and inclination of the head of the person in a captured image I. In this case, use of the orientation of a shoulder line or the like can realize accurate determination of the inclination of the head in the captured image I. Further, the image analyzing unit 22a may specify the position and orientation of a part (e.g., an eye, the nose, and the like) of the user U's face, rather than the entire face, and the posture parameter calculating unit 22b may calculate the value of the posture parameter, based on the specified position and orientation of the part of the face.

Further, the image analyzing unit 22a may specify a person other than the user U holding the operation input device 1. That is, as described above, the lens of the image capturing unit 12 can rotate to be directed to the side of the back surface of the operation input device 1. With the image capturing direction Dc of the image capturing unit 12 directed to the side of the back surface of the operation input device 1, the posture determining unit 22 can obtain a captured image I containing a person other than the user U, and determine the posture of the operation input device 1, based on the position and orientation of the person contained in the captured image I. Note that, in this case, as the image capturing direction Dc of the image capturing unit 12 relative to the operation input device 1 is reversed from that which has been described in the above, the relationship between the position in the left-right direction of the face position Pf in the captured image I and the roll angle θr is reversed from that which has been described above. Further, the relationship between the rotation direction of the face direction Df and the yaw angle θy is also reversed. Thus, when the lens of the image capturing unit 12 is directed toward the side of the back surface, the posture determining unit 22 may reverse the captured image I in the left-right direction before analyzing the image to thereby correct the influence due to the reversed image capturing direction Dc.

Further, the posture determining unit 22 may specify a target object other than a person, and determine the posture of the operation input device 1, based on the position and orientation of the target object. Alternatively, a change in the posture of the operation input device 1 may be determined based on the movement and rotation of a characteristic point specified in the captured image I.

Although it is described in the above that the posture determining unit 22 calculates the values of the rotation angles θr, θp, and θy, and outputs as posture parameters to the displayed image update unit 23, this is not limiting. That is, the posture determining unit 22 may calculate another posture parameter. In particular, when the operation input device 1 according to this embodiment is used instead of an operation input device having a posture determining sensor, such as an acceleration sensor, the calculated values of the rotation angles θr, θp, and θy may be first converted into values that are assumed to be output values from an acceleration sensor or the like before being output to the displayed image update unit 23. With the above, in a case where the displayed image update unit 23 is realized according to an application program, such as a game application program, the user U can realize an identical process through an identical operation both when using an operation input device having a posture determining sensor and when using the operation input device 1 according to this embodiment, without changing the content of a process of the displayed image update unit 23 from a conventional process.

Note that, e.g., an output of an acceleration sensor will change depending on the relationship between the vertical direction, in which the gravity acceleration is caused, and the orientation of the operation input device 1. Therefore, in emulation of an output from an acceleration sensor, using the operation input device 1 according to this embodiment, it is not possible to completely reproduce an output of the acceleration sensor if the vertical direction cannot be specified. However, some programs for carrying out a process using an output of an acceleration sensor may use posture information on the operation input device 1 specified based on the relationship with gravity acceleration as mere information on relative inclination relative to the reference posture or on change in the inclination as time passes. According to such a program, the real vertical direction corresponds to which direction relative to the operation input device 1 does not matter. In view of the above, after setting a virtual gravity direction in a predetermined direction, the posture determining unit 22 calculates acceleration relative to a respective reference axis that will be caused when gravity is caused in that direction, using the value of the respective rotation angle θr, θp, and θy, and outputs the calculated acceleration value to the displayed image update unit 23. With the above, it is possible to realize a process of updating a displayed image through an operation identical to that which is carried out when using an operation input device having an acceleration sensor, without changing the content of the program for realizing the displayed image update unit 23.

Note that in emulation of an operation input device having such a posture determining sensor, the user U may freely determine that a change in the posture of the operation input device 1 according to this embodiment relative to which direction corresponds to a change in the posture of an operation input device having a posture determining sensor relative to which direction. For example, according to a designation by the user U, the operation input device 1 allocates each of the rotation angles θr, θp, and θy formed with the respective X, Y, and Z axes set on the operation input device 1 as the rotation axis to a rotation angle formed with any of the X, Y, and Z axes set on an operation input device having a posture determining sensor as the rotation axis. With the above, the user U can input an operation by inclining the operation input device 1 in a manner that facilities operation by the user U, irrespective of the shape of the operation input device 1. Alternatively, depending on the orientation of the user U's face determined by the image analyzing unit 22a, a condition set in advance by an application program, or the like, the operation input device 1 may allocate each of the rotation angles θr, θp, and θy to a rotation angle formed with any of the reference axes of an operation input device to be emulated as the rotation axis. For example, in a case where it is expected that a user holds the operation input device 1 either in portrait orientation (with the longitudinal direction of the operation input device 1 extending along the vertical direction) or landscape orientation (with the longitudinal direction of the operation input device 1 extending in the user's left-right direction), the operation input device 1 determines whether the user holds the operation input device 1 in the portrait orientation or the landscape orientation, based on the orientation of the face determined or a designation by the application program. Then, the allocation of the rotation angle is determined, based on the result of the determination. With the above, the user can input an operation by inclining the operation input device 1 while holding the operation input device 1 either in the portrait or landscape orientation without being aware of the orientation of the operation input device 1.

### [Second Embodiment]

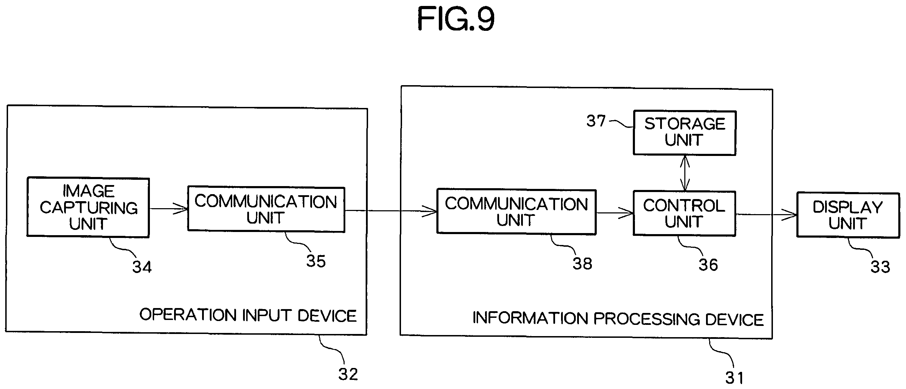

In the following, an information processing system including an information processing device 31 according to a second embodiment of the present invention will be described referring to FIG. 9. In the first embodiment, the operation input device 1 itself determines the posture thereof, based on a captured image I. However, in the second embodiment, another information processing device 31 connected to an operation input device 32 determines the posture of the operation input device 32 and carry out an information process, based on the result of the posture determination.

Note that the operation input device 32 may be a controller of a consumer game device, and used to input an operation by the user U to the information processing device 31. The information processing device 31 may be, e.g., a consumer game device, and carries out various processes, based on an operation input by the user U via the operation input device 32, and shows the result of the process on the screen of a display unit 33, such as a television receiver or the like.

In the example shown in FIG. 9, an image capturing unit 34 is provided on the external surface of the operation input device 32. The operation input device 32 has a communication unit 35, so that a captured image I captured by the image capturing unit 34 is sent to the information processing device 31 via the communication unit 35. The information processing device 31 comprises a control unit 36, a storage unit 37, and a communication unit 38, and the control unit 36 carries out an information process according to a program stored in the storage unit 37. The communication unit 38 carries out data communication with the communication unit 35 of the operation input device 32.

In this example as well, the control unit 36 of the information processing device 31 can determine the posture of the operation input device 32 by carrying out a process identical to that which is carried out with the above described operation input device 1. That is, the control unit 36 obtains, via the communication unit 35 and the communication unit 38, a captured image I captured by the image capturing unit 34, then determines the posture of the operation input device 32, based on the obtained result of analysis on the captured image I, and carries out a process based on the posture determined.

## Claims

1. An operation input device (1) for use by a user (U) while being held by the user's hand, comprising:
captured image obtaining means for obtaining a captured image captured by an image capturing unit (12) attached to the operation input device (1); and
posture determining means (14, 22) for determining posture of the operation input device (1), based on a result of analysis on the captured image obtained, wherein
the posture determining means (14, 22) specifies an entirety or a part of a face of the user (U) holding the operation input device (1) as a target object contained in the captured image obtained, and determines the posture of the operation input device (1); and
in determining the posture of the operation input device (1) a roll angle, a pitch angle, and a yaw angle of the operation input device (1) with respect to a reference posture of the operation input device (1) are calculated only based on the captured image from a position (Pf) and an orientation (Df) of the entirety or the part of the face of the user.

2. The operation input device (1) according to claim 1, wherein the posture determining means (14, 22) determines inclination of the operation input device (1) relative to a direction from the image capturing unit (12) to the target object, based on a position of the target object in the captured image.

3. The operation input device (1) according to claim 2, wherein when the position (Pf) of the target object in the captured image is changed, the posture determining means (14, 22) determines a change in orientation (Df) of the target object relative to the direction from the image capturing unit (12) to the target object, and calculates an amount of change in the inclination of the operation input device (1) relative to the direction from the image capturing unit to the target object, based on the change determined in the orientation of the image capturing image.

4. The operation input device (1) according to claim 1, wherein the posture determining means (14, 22) determines inclination of the operation input device (1) on a plane perpendicular to an image capturing direction, based on orientation of the target object in the captured image.

5. An information processing device (31) connected to an operation input device (32) for use by a user (U) while being held by the user's hand, the information processing device (31) comprising:
captured image obtaining means (38) for obtaining from the operation input device (32) a captured image captured by an image capturing unit (34) attached to the operation input device (32); and
posture determining means (36) for determining posture of the operation input device (32), based on a result of analysis on the captured image obtained, wherein
the posture determining means (36) specifies an entirety or a part of a face of the user (U) holding the operation input device (32) as a target object contained in the captured image obtained, and determines the posture of the operation input device (32); and
in determining the posture of the operation input device (32) a roll angle, a pitch angle, and a yaw angle of the operation input device (32) with respect to a reference posture of the operation input device (32) are calculated only based on the captured image from a position (Pf) and an orientation (Df) of the entirety or the part of the face of the user (U).

6. A posture determining method for an operation input device (1, 32), comprising:
a step of obtaining a captured image captured by an image capturing unit (12, 34) attached to the operation input device (1, 32); and
a step of determining posture of the operation input device (1, 32), based on a result of analysis on the captured image obtained, wherein
in the step of determining the posture an entirety or a part of a face of the user (U) holding the operation input device (1, 32) is specified as a target object contained in the captured image obtained, and a roll angle, a pitch angle, and a yaw angle of the operation input device (1, 32) with respect to a reference posture of the operation input device (1, 32) are calculated only based on the captured image from a position (Pf) and an orientation (Df) of the entirety or the part of the face of the user.

7. A computer readable information storage medium storing a program which, when executed by a computer, causes the computer to carry out the method of claim 6.

## Patentansprüche

1. Bedienungseingabeeinrichtung (1) zur Verwendung durch einen Benutzer (U) während des Haltens in der Hand des Benutzers, umfassend:
Erhaltmittel für erfasste Bilder zum Erhalten eines erfassten Bildes, erfasst durch eine Bilderfassungseinheit (12), angebracht an der Bedienungseingabeeinrichtung (1); und
Haltungsermittlungsmittel (14, 22) zum Ermitteln einer Haltung der Bedienungseingabeeinrichtung (1), basierend auf einem Analyseergebnis an dem erfassten erhaltenen Bild, wobei
die Haltungsermittlungsmittel (14, 22) eine Gesamtheit oder einen Teil eines Gesichts des Benutzers (U) angeben, der die Bedienungseingabeeinrichtung (1) als ein in dem erfassten erhaltenen Bild enthaltenes Zielobjekt hält, und die Haltung der Bedienungseingabeeinrichtung (1) ermitteln; und
bei der Ermittlung der Haltung der Bedienungseingabeeinrichtung (1) ein Wankwinkel, ein Steigungswinkel und ein Gierwinkel der Bedienungseingabeeinrichtung (1) mit Bezug auf eine Referenzhaltung der Bedienungseingabeeinrichtung (1) nur basierend auf dem erfassten Bild von einer Position (Pf) und einer Ausrichtung (Df) der Gesamtheit oder des Teils des Gesichts des Benutzers berechnet werden.

2. Bedienungseingabeeinrichtung (1) nach Anspruch 1, wobei die Haltungsermittlungsmittel (14, 22) die Neigung der Bedienungseingabeeinrichtung (1) relativ zu einer Richtung von der Bilderfassungseinheit (12) zu dem Zielobjekt ermittelt, basierend auf einer Position des Zielobjekts in dem erfassten Bild.

3. Bedienungseingabeeinrichtung (1) nach Anspruch 2, wobei, wenn sich die Position (Pf) des Zielobjekts in dem erfassten Bild ändert, die Haltungsermittlungsmittel (14, 22) eine Änderung der Ausrichtung (Df) des Zielobjekts relativ zu der Richtung von der Bilderfassungseinheit (12) zu dem Zielobjekt ermitteln und einen Umfang der Änderung bei der Neigung der Bedienungseingabeeinrichtung (1) relativ zu der Richtung von der Bilderfassungseinheit zu dem Zielobjekt berechnen, basierend auf der ermittelten Änderung in der Ausrichtung der Bilderfassungseinheit.

4. Bedienungseingabeeinrichtung (1) nach Anspruch 1, wobei die Haltungsermittlungsmittel (14, 22) die Neigung der Bedienungseingabeeinrichtung (1) auf einer Ebene ermitteln, die senkrecht zu einer Bilderfassungsrichtung verläuft, basierend auf einer Ausrichtung des Zielobjekts in dem erfassten Bild.

5. Informationsverarbeitungseinrichtung (31), verbunden mit einer Bedienungseingabeeinrichtung (32), zur Verwendung durch einen Benutzer (U) während des Haltens in der Hand des Benutzers, wobei die Informationsverarbeitungseinrichtung (31) umfasst:
Erhaltmittel (38) für erfasste Bilder zum Erhalten eines erfassten Bildes von der Bedienungseingabeeinrichtung (32), erfasst durch eine Bilderfassungseinheit (34), angebracht an der Bedienungseingabeeinrichtung (32); und
Haltungsermittlungsmittel (36) zum Ermitteln einer Haltung der Bedienungseingabeeinrichtung (32), basierend auf einem Analyseergebnis an dem erfassten erhaltenen Bild, wobei
die Haltungsermittlungsmittel (36) eine Gesamtheit oder einen Teil eines Gesichts des Benutzers (U) angeben, der die Bedienungseingabeeinrichtung (32) als ein in dem erfassten erhaltenen Bild enthaltenes Zielobjekt hält, und die Haltung der Bedienungseingabeeinrichtung (32) ermitteln; und
bei der Ermittlung der Haltung der Bedienungseingabeeinrichtung (32) ein Wankwinkel, ein Steigungswinkel und ein Gierwinkel der Bedienungseingabeeinrichtung (32) mit Bezug auf eine Referenzhaltung der Bedienungseingabeeinrichtung (32) nur basierend auf dem erfassten Bild von einer Position (Pf) und einer Ausrichtung (Df) der Gesamtheit oder des Teils des Gesichts des Benutzers (U) berechnet werden.

6. Haltungsermittlungsverfahren für eine Bedienungseingabeeinrichtung (1, 32), umfassend:
einen Schritt des Erhaltens eines erfassten Bildes, erfasst durch eine Bilderfassungseinheit (12, 34), die an der Bedienungseingabeeinrichtung (1, 32) angebracht ist; und
einen Schritt des Ermittelns der Haltung der Bedienungseingabeeinrichtung (1, 32), basierend auf einem Analyseergebnis an dem erfassten erhaltenen Bild, wobei
bei dem Schritt des Ermittelns der Haltung eine Gesamtheit oder ein Teil eines Gesichts des Benutzers (U), der die Bedienungseingabeeinrichtung (1, 32) hält, als ein in dem erfassten erhaltenen Bild enthaltenes Zielobjekt angegeben ist und ein Wankwinkel, ein Steigungswinkel und ein Gierwinkel der Bedienungseingabeeinrichtung (1, 32) mit Bezug auf eine Referenzhaltung der Bedienungseingabeeinrichtung (1, 32) nur basierend auf dem erfassten Bild von einer Position (Pf) und einer Ausrichtung (Df) der Gesamtheit oder des Teils des Gesichts des Benutzers berechnet werden.

7. Rechnerlesbares Informationsspeichermedium, speichernd ein Programm, das bei Ausführung durch einen Rechner den Rechner veranlasst, das Verfahren nach Anspruch 6 durchzuführen.

## Revendications

1. Dispositif d'entrée d'opération (1) à utiliser par un utilisateur (U) tout en étant tenu par la main de l'utilisateur, comprenant:
des moyens d'obtention d'image capturée pour obtenir une image capturée capturée par une unité de capture d'image (12) prévue sur le dispositif d'entrée d'opération; et
des moyens de détermination de posture (14, 22) pour déterminer une posture du dispositif d'entrée d'opération (1), sur la base d'un résultat d'une analyse sur l'image capturée obtenue,
dans lequel:
les moyens de détermination de posture (14, 22) spécifient une totalité ou une partie d'une face de l'utilisateur (U) qui tient le dispositif d'entrée d'opération (1) comme un objet cible contenu dans l'image capturée obtenue, et déterminent la posture du dispositif d'entrée d'opération (1); et
pour déterminer la posture du dispositif d'entrée d'opération (1), un angle de roulis, un angle de tangage et un angle de lacet du dispositif d'entrée d'opération (1) par rapport à une posture de référence du dispositif d'entrée d'opération (1) sont calculés uniquement sur la base de l'image capturée à partir d'une position (Pf) et d'une orientation (Df) de la totalité ou d'une partie de la face de l'utilisateur.

2. Dispositif d'entrée d'opération (1) selon la revendication 1, dans lequel les moyens de détermination de posture (14, 22) déterminent l'inclinaison du dispositif d'entrée d'opération (1) par rapport à une direction partant de l'unité de capture d'image (12) jusqu'à l'objet cible, sur la base d'une position de l'objet cible dans l'image capturée.

3. Dispositif d'entrée d'opération (1) selon la revendication 2, dans lequel, lorsque la position (Pf) de l'objet cible dans l'image capturée est modifiée, les moyens de détermination de posture (14, 22) déterminent une variation de l'orientation (Df) de l'objet cible par rapport à la direction partant de l'unité de capture d'image (12) jusqu'à l'objet cible, et calculent un degré de variation de l'inclinaison du dispositif d'entrée d'opération (1) par rapport à la direction partant de l'unité de capture d'image jusqu'à l'objet cible, sur la base de la variation déterminée de l'orientation de l'unité de capture d'image.

4. Dispositif d'entrée d'opération (1) selon la revendication 1, dans lequel les moyens de détermination de posture (14, 22) déterminent une inclinaison du dispositif d'entrée d'opération sur un plan perpendiculaire à une direction de capture d'image, sur la base d'une orientation de l'objet cible dans l'image capturée.

5. Dispositif de traitement d'informations (31) connecté à un dispositif d'entrée d'opération (32) à utiliser par un utilisateur (U) tout en étant tenu par la main de l'utilisateur, le dispositif de traitement d'informations (31) comprenant:
des moyens d'obtention d'image capturée (38) pour obtenir à partir du dispositif d'entrée d'opération (32) une image capturée capturée par une unité de capture d'image (34) qui est attachée au dispositif d'entrée d'opération (32); et
des moyens de détermination de posture (36) pour déterminer la posture du dispositif d'entrée d'opération (32) sur la base d'un résultat d'une analyse sur l'image capturée obtenue,
dans lequel:
les moyens de détermination de posture (36) spécifient une totalité ou une partie d'une face de l'utilisateur (U) qui tient le dispositif d'entrée d'opération (32) comme un objet cible contenu dans l'image capturée obtenue, et déterminent la posture du dispositif d'entrée d'opération (32); et
pour déterminer la posture du dispositif d'entrée d'opération (32), un angle de roulis, un angle de tangage et un angle de lacet du dispositif d'entrée d'opération (32) par rapport à une posture de référence du dispositif d'entrée d'opération (32) sont calculés uniquement sur la base de l'image capturée à partir d'une position (Pf) et d'une orientation (Df) de la totalité ou d'une partie de la face de l'utilisateur.

6. Procédé de détermination de posture pour un dispositif d'entrée d'opération (1, 32), comprenant:
une étape d'obtention d'une image capturée capturée par une unité de capture d'image (12, 34) qui est attachée au dispositif d'entrée d'opération (1, 32); et
une étape de détermination de la posture du dispositif d'entrée d'opération (1, 32) sur la base d'un résultat d'une analyse sur l'image capturée obtenue,
dans lequel, à l'étape de détermination, la posture d'une totalité ou d'une partie d'une face de l'utilisateur (U) qui tient le dispositif d'entrée d'opération (1, 32) est spécifiée comme objet cible contenu dans l'image capturée obtenue, et un angle de roulis, un angle de tangage et un angle de lacet du dispositif d'entrée d'opération (1, 32) par rapport à une posture de référence du dispositif d'entrée d'opération (1, 32) sont calculés uniquement sur la base de l'image capturée à partir d'une position (Pf) et d'une orientation (Df) de la totalité ou d'une partie de la face de l'utilisateur.

7. Support de stockage d'informations lisible par un ordinateur stockant un programme qui, lorsqu'il est exécuté par un ordinateur, amène l'ordinateur à exécuter le procédé selon la revendication 6.
